# EUROPÄISCHE PATENTSCHRIFT

(11) **EP 2 004 426 B1**
(45) Veröffentlichungstag und Bekanntmachung des Hinweises auf die Patenterteilung: **02.11.2011**
(21) Anmeldenummer: 07724210.5
(22) Anmeldetag: 12.04.2007
(51) Int. Cl.: B60B 39/00

(54) **SCHLEUDERKETTENSYSTEM**
CENTRIFUGAL CHAIN SYSTEM
SYSTÈME DE CHAÎNE CENTRIFUGE

(30) Priorität: 12.04.2006 DE 202006005979 U
(43) Veröffentlichungstag der Anmeldung: 24.12.2008
(73) Patentinhaber: Karl Hildebrand GmbH, 40699 Erkrath (DE)
(72) Erfinder: KOCKEL, Wolfgang, 40699 Erkrath (DE); HILDEBRAND, Cyril, 40699 Erkrath (DE)
(74) Vertreter: Heim, Florian Andreas
(86) Internationale Anmeldenummer: PCT/EP2007/003269
(87) Internationale Veröffentlichungsnummer: WO 2007/118678

(56) Entgegenhaltungen:
- EP-A2- 0 241 411
- WO-A-89/07533
- WO-A-99/38714
- WO-A-2006/136286
- DE-A1- 19 801 237
- US-A- 2 241 923

## Beschreibung

Die Erfindung betrifft ein Schleuderkettensystem gemäß dem Oberbegriff des Anspruchs 1.

Schleuderkettensysteme werden beispielsweise bei schweren Nutzfahrzeugen wie LKWs als Alternativen zu Schneeketten eingesetzt. Das Grundprinzip eines Schleuderkettensystems basiert auf einer runden Scheibe, an der kurze Schleuderketten im Randbereich befestigt sind. Wird diese Scheibe in Rotation versetzt, so werden die Kettenstücke durch Fliehkräfte nach außen gedrückt, so dass sie strahlenförmig vom Drehpunkt der Scheibe abstehen. Bei einem Schleuderkettensystem kann die Scheibe z.B. an einem Seitenbereich eines Reifens in Eingriff gebracht werden, so dass durch die Drehung des Reifens die Scheibe in Bewegung versetzt wird.

Die Scheibe mit den Schleuderketten ist derart positioniert, dass die Kettenstücke unter den Reifen geschleudert werden und der Reifen über den Schleuderketten abrollt. Genauer gesehen befinden sich die Kettenstücke zwischen der Reifenoberfläche und dem Untergrund und haben eine vergleichbare Wirkung wie Schneeketten.

Wird die Scheibe mit den Schleuderketten nicht benötigt, so ist ein Mechanismus vorgesehen, um die Scheibe in eine Lagerposition zu überführen. Hierbei sind verschiedene Systeme bekannt. Weit verbreitet ist das Anbringen der Scheibe mit den Schleuderketten an einem Schwenkarm, der wiederum beispielsweise durch Bautenzüge oder Zug- und Federelemente aus einer Betriebsposition, in der er im Eingriff mit dem Reifen steht, in eine Lagerungsposition überführbar ist. Die verschiedenen Betätigungsarten von Schleuderkettensystemen geben oft die geometrische und konstruktionsbedingte Lage des Systems zu dem Reifen vor.

Meist ist ein Schleuderkettensystem für jeden Reifen an der Antriebsachse vorgesehen. Schleuderkettensysteme sind oft im Unterbodenbereich des Fahrzeuges angebracht. Da aber auch viele andere Einrichtungen im Unterbodenbereich vorgesehen sind, ist eine Montage und Positionierung des Schleuderkettensystems schwierig und teilweise bei kleineren Fahrzeugen nicht durchführbar.

Ein gattungsgemäßes Schleuderkettensystem ist beispielsweise aus WO 99/038714 bekannt.

Der Erfindung liegt die **Aufgabe** zugrunde, ein Schleuderkettensystem zu schaffen, das durch große Flexibilität im Aufbau einfach und positionsoptimiert montiert werden kann.

Die Aufgabe wird erfindungsgemäß durch ein Schleuderkettensystem mit den Merkmalen des Anspruchs 1 gelöst.

Weitere vorteilhafte Ausführungsformen sind in den abhängigen Ansprüchen, der Beschreibung sowie in den Figuren und deren Erläuterungen angegeben.

Ein erfindungsgemäßes Schleuderkettensystem ist **dadurch gekennzeichnet, dass** ein Rotationsantrieb vorgesehen ist. Dieses dient zum Übertragen einer Kraft mittels eines Zugmittelgetriebes auf einen Schwenkarm.

Ein Grundgedanke der Erfindung ist es, den Antrieb des Schleuderkettensystems sowie das Getriebe unabhängig von der Position des Drehpunktes des Schwenkarmes anordnen zu können. Die Kombination eines Rotationsantriebes mit einem Zugmittelgetriebe ermöglicht es, den Drehpunkt des Schwenkarmes aus der Mitte des Rotationsantriebes wahlfrei zu verlagern und damit einen optimierten Drehwinkel des Schwenkarmes zu erhalten. Hieraus resultiert ein hoher Freiheitsgrad bei der Wahl des Montageortes, so dass eine optimale Einbausituation gewählt werden kann. Der Rotationsantrieb kann auch als Dreh- oder Schwenkantrieb bezeichnet werden.

Durch die Verwendung eines Zugmittelgetriebes in Verbindung mit einem Rotationsantrieb kann der Antrieb an einer beliebigen Position an einem Fahrzeug angebracht werden. Die Übertragung der Kraft des Rotationsantriebes an den Schwenkarm zum Auslösen der Schwenkbewegung wird über das Zugmittelgetriebe ausgeführt. Da bei der Kombination eines Rotationsantriebes mit einem Zugmittelgetriebe keine zwingende geometrische Anordnung konstruktionsbedingt vorgegeben ist, ergeben sich große Freiheitsgrade bei Positionierung des Antriebes, beispielsweise am Unterbodenbereich. Dies bietet bei knappen Platzverhältnissen unter Fahrzeugen einen erheblichen Vorteil bei der Montage und Positionierung.

Durch die Möglichkeit der flexiblen Wahl des Befestigungsortes des Schleuderkettensystems am Fahrzeug ergeben sich vor allem Vorteile bei kleineren Fahrzeugen, bei denen weniger Platz im Unterbodenbereich zur Verfügung steht. Ebenso bietet sich durch die flexible Möglichkeit der Ortswahl der Montage auch bei großen Nutzfahrzeugen, beispielsweise LKWs mit 7,5 Tonnen oder mehr, der Vorteil einer einfachen nachträglichen Montage eines derartigen Schleuderkettensystems an, da es an vorhandene Platzverhältnisse angepasst werden kann.

Grundsätzlich ist jedes Getriebe zur Übertragung der Kraft des Rotationsantriebes an den Schwenkarm geeignet, welches keine speziellen Anforderungen an die Geometrie der Anordnung zwischen Antrieb und Schwenkarm stellt. Bei der Verwendung eines Zugmittelgetriebes hat es sich als vorteilhaft herausgestellt, wenn ein erstes Umlenkmittel mit einer ersten Drehachse vorgesehen ist. Dieses Umlenkmittel kann zur Übertragung der Kraft des Rotationsantriebes auf das Zugmittelgetriebe dienen.

Des Weiteren ist in einer vorteilhaften Ausführungsform vorgesehen, dass im Bereich des Schwenkarmes ein zweites Umlenkmittel mit einer zweiten Drehachse vorgesehen ist. Vorteilhafterweise ist dieses zweite Umlenkmittel zur Kraftübertragung von dem Zugmittelgetriebe auf den Schwenkarm ausgebildet. Das zweite Umlenkmittel befindet sich an dem Endbereich des Schwenkarmes, der der Schleuderketteneinrichtung abgewandt ist. Die Übertragung der Kraft des Rotationsantriebes an das Zugmittelgetriebe und vom Zugmittelgetriebe auf den Schwenkarm kann durch die beiden Umlenkmittel besonders einfach ausgeführt werden.

Vorteilhaft an dieser Ausführungsform ist auch, dass, da im Unterbodenbereich eines Fahrzeugs mit starker Verschmutzung zu rechnen ist, die hierbei verwendeten Bauteile robust auslegbar sind, so dass eine Verschmutzung keine nachteiligen Einflüsse auf die Einsatzbereitschaft hervorruft. Grundsätzlich ist es auch möglich, nur eines der beiden Umlenkmittel vorzusehen und die Kraftübertragung des anderen Umlenkmittels durch eine andere Einrichtung auszuführen.

Für eine robuste und störungsarme Auslegung des Schleuderkettensystems hat es sich als vorteilhaft herausgestellt, das Zugmittelgetriebe beispielsweise in Form einer Kette mit beweglichen Kettengliedern auszuführen. Es sind aber auch andere Zugmittelgetriebearten wie Zahnriemen oder Keilriemen geeignet. Die Übertragung der Kräfte auf das Zugmittelgetriebe, beziehungsweise von dem Zugmittelgetriebe auf die Umlenkmittel, kann je nach Wahl der Zugmittelgetriebeart form- und/oder reibschlüssig ausgeführt sein. Bei der Ausführung des Zugmittelgetriebes in Form einer Kette sind hierbei besonders zahnradartige Umlenkmittel bevorzugt.

Bei zahnradartigen Umlenkmitteln kann durch die Anzahl der Zähne des Zahnrades am Schwenkarm das Übersetzungsverhältnis und damit der Schwenkradius und die Schwenkgeschwindigkeit beeinflusst werden. Diese Beeinflussung ist bei anderen Arten von Umlenkmitteln, beispielsweise durch unterschiedliche Radien der Umlenkmittel, möglich. Die Armlagerung des Schwenkarmes befindet sich bevorzugterweise in der Drehachse des zweiten Umlenkmittels. Grundsätzlich kann sie aber auch von der Achse abweichen, um eine bessere Positionierung des Schleuderkettensystems zu ermöglichen. Meist ist die Armlagerung rund oder als Konus ausgebildet. Sie kann aber auch in Form eines Vielecks, beispielsweise eines Achtecks oder anderen polygonen Formen ausgebildet sein.

Um eine besonders sichere und fehlerarme Funktion des Getriebes zu erreichen, hat es sich als vorteilhaft herausgestellt, wenn ein weiteres Umlenkmittel vorgesehen ist, welches zur Vorspannung des Zugmittelgetriebes, insbesondere der Kette, ausgebildet ist. Bei einem großen Abstand zwischen dem Rotationsantrieb und der Drehachse des Schwenkarmes können auch weitere Vorspanneinrichtungen entlang des Zugmittelgetriebes vorgesehen sein.

In einer vorteilhaften Ausführungsform weist der Rotationsantrieb eine im Wesentlichen längliche Form mit einer GehäuseLängsachse auf. Diese Gehäuse-Längsachse bildet mit einer Verbindungsgeraden durch die Drehachsen der ersten beiden Umlenkmittel einen Winkel. Dieser Winkel kann beliebig sein, vorteilhaft weist er einen Betrag zwischen +/- 45° auf. Bevorzugt liegt er in einem Bereich von 10° bis 20°, insbesondere bei 12°. Der Winkel gibt die Abweichung des Kettengetriebes und somit des Schwenkpunktes des Schwenkarmes von der Gehäuse-Längsachse des Rotationsantriebes an. Durch die beliebige Wahl dieses Winkels und somit auch der Platzierung des Rotationsantriebes in Bezug auf den Drehpunkt des Schwenkarmes, kann das erfindungsgemäße Schleuderkettensystem äußerst flexibel, auch bei beengten Platzverhältnissen, an Fahrzeugen angebracht werden. So kann der Rotationsantrieb z.B. parallel zur Fahrtrichtung eingebaut werden.

Für eine besonders störungsarme und sichere Übertragung der Kräfte von und auf das Zugmittelgetriebe ist ferner vorgesehen, dass die erste und/oder die zweite Drehachse der Umlenkmittel im Wesentlichen senkrecht zu einer Ebene ausgerichtet sind, in der das Zugmittelgetriebe verläuft. Für eine Platz sparende Anbringung kann es vorteilhaft sein, die beiden Drehachsen in beliebigen Winkeln zueinander anzuordnen. Bevorzugt ist aber, wenn beide Drehachsen im Wesentlichen parallel zueinander ausgelegt sind. Hierdurch entstehen weniger Kräfte auf die Lagerungen der Umlenkmittel und das Zugmittelgetriebe, wodurch eine lange Einsatzzeit erreicht werden kann.

Da Schleuderkettensysteme hauptsächlich im Nutzfahrzeugbereich, beispielsweise in LKWs, eingesetzt werden, ist es bevorzugt, wenn der Rotationsantrieb hydraulisch bzw. pneumatisch, angetrieben ist. Hierfür steht bei derartigen Fahrzeugen meist eine boardeigene Energieversorgung zur Verfügung. So kann ein leicht modifizierter Standard-Drehantrieb, wie er in der mit Flüssigkeiten arbeitenden Industrie, z.B. für Ventilabsperrungen, benutzt wird, verwendet werden. Dieser kann z.B. ein Gehäuse mit einem Ritzel und zwei Kolben aufweisen. An den zwei Kolben ist jeweils eine Zahnstange angebracht, die mit dem Ritzel in Eingriff steht. Je nach der Druckbeaufschlagung fahren die Kolben zusammen oder auseinander. Hierbei versetzen sie das Ritzel in Bewegung. Grundsätzlich ist aber auch eine andere Antriebsart, beispielsweise ein elektrischer Antrieb, möglich.

Um den Schutz des Schleuderkettensystems beispielsweise vor Schmutz oder Streusalzen zu verbessern, ist es vorteilhaft, wenn mindestens ein Gehäuse für die Betätigungseinrichtung und/oder den Rotationsantrieb vorgesehen ist. So kann das Gehäuse des Rotationsantriebes an ein Getriebegehäuse in dem das Kettengetriebe verläuft, angeflanscht sein. Hierbei ist auch eine differenzierte Anflanschung des Rotationsantriebes zur Anpassung an die gegebenen Platzverhältnisse möglich. Ebenso kommt aber auch ein gemeinsames Gehäuse, an dem sich der Schwenkarm befindet, in Betracht.

Die Erfindung wird nachfolgend anhand eines Ausführungsbeispiels und schematischer Zeichnungen näher erläutert. In diesen Zeichnungen zeigen:
- Fig. 1: eine Aufsicht auf ein erfindungsgemäßes Schleuderkettensystem in der Einsatzposition;
- Fig. 2: eine teilweise horizontal geschnittene Aufsicht auf eine Betätigungseinrichtung mit Rotationsantrieb eines erfindungsgemäßen Schleuderkettensystems, vergleichbar mit Fig. 1; und
- Fig. 3: eine teilweise vertikal geschnittene seitliche Ansicht auf die Betätigungseinrichtung mit Rotationsantrieb eines erfindungsgemäßen Schleuderkettensystems, vergleichbar mit Fig. 2.

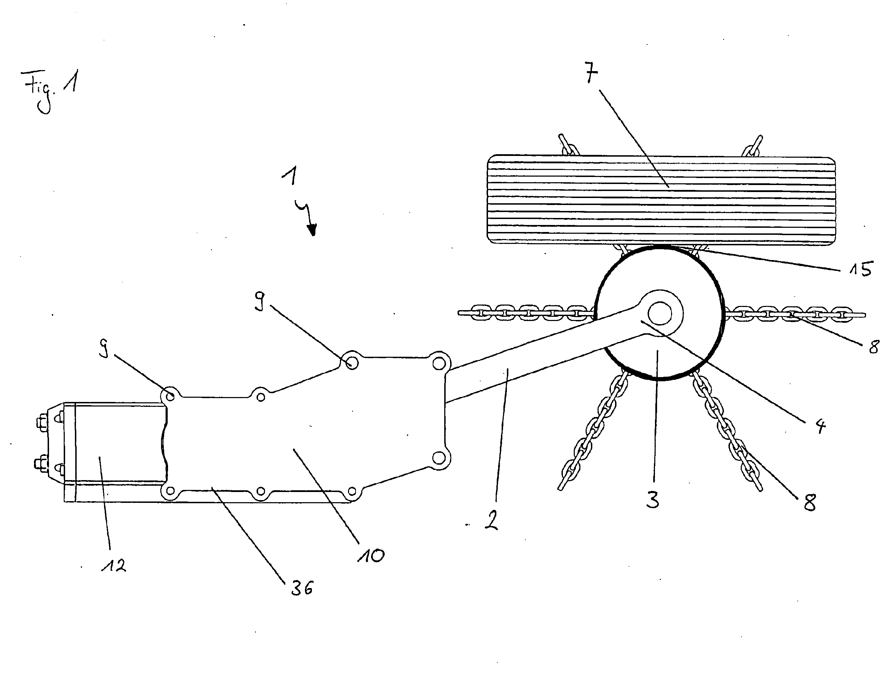

Fig. 1 zeigt eine schematisierte Aufsicht auf ein erfindungsgemäßes Schleuderkettensystem 1. Hierbei ist das Schleuderkettensystem 1 nicht an dem Unterboden eines Fahrzeuges angebracht, sondern zur Verdeutlichung frei schwebend dargestellt. Das Schleuderkettensystem 1 besteht aus einem Rotationsantrieb 12, einer Betätigungseinrichtung 10, einem Schwenkarm 2 und einer Schleuderketteneinrichtung 3.

Die Schleuderkettenrichtung 3 ist in der hier dargestellten Abbildung (bei 15) in reibschlüssigen Eingriff mit einem Reifen 7 gebracht. Durch die Drehung des Reifens 7 wird die Schleuderketteneinrichtung 3 in Rotation versetzt und die Schleuderketten 8 werden zwischen den Reifen 7 und den Untergrund geschleudert. Die Schleuderketteneinrichtung 3 ist an einem ersten Endbereich 4 des Schwenkarmes 2 drehbar gelagert. Würde das Schleuderkettensystem 1 nicht mehr eingesetzt werden, so würde der Schwenkarm 2 von dem Reifen 7 weggeschwenkt.

Das hier gezeigte Schleuderkettensystem 1 kann über die Befestigungspunkte 9 der Betätigungseinrichtung 10 an dem Unterboden eines Fahrzeugs angebracht werden. Der Rotationsantrieb 12 ist wiederum an der Betätigungseinrichtung 10 angeflanscht.

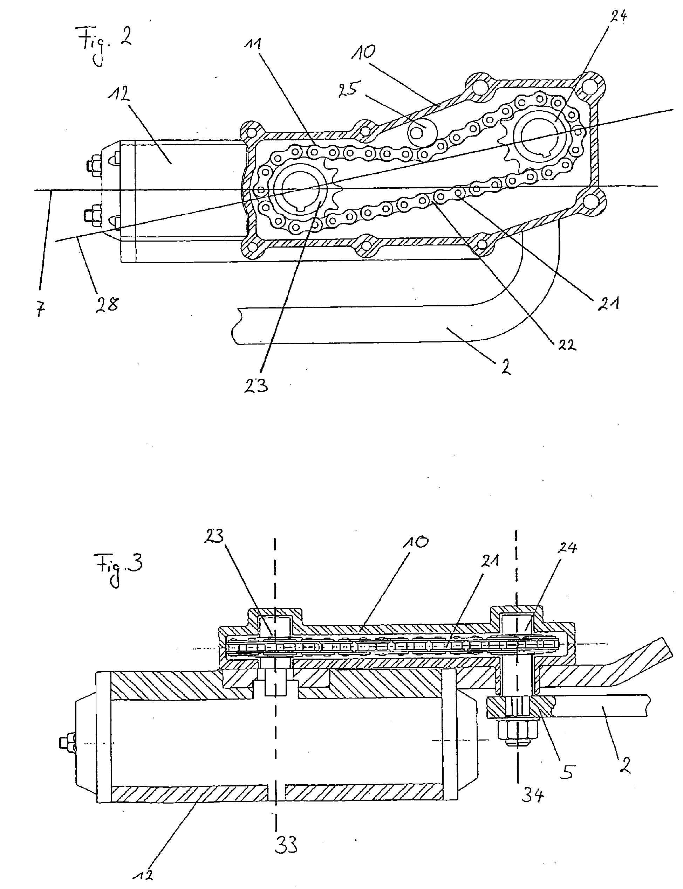

Die Figuren 2 und 3 zeigen ein erfindungsgemäßes Schleuderkettensystem 1. Hierbei ist der Bereich des Zugmittelgetriebes 11, welches in diesem Ausführungsbeispiel als Kette 21 ausgebildet ist, teilweise geschnitten dargestellt. Der Rotationsantrieb 12 überträgt ein Drehmoment über ein erstes Umlenkmittel 23, welches als Zahnrad ausgebildet ist, an die Kette 21 mit einzelnen Kettengliedern 22. Die Kette 21 gibt die aufgenommene Kraft des Rotationsantriebs 12 an ein zweites, ebenfalls als Zahnrad ausgebildetes, Umlenkmittel 24 weiter. An diesem zweiten Umlenkmittel 24 befindet sich der Schwenkarm 2, der in einem zweiten Endbereich 5 an einer Welle des zweiten Umlenkmittels 24 befestigt ist.

Die Welle dient als Lagerung des Umlenkmittels und ist mittels einer Nase und einer entsprechenden Nut am Umlenkmittel mit dem Umlenkmittel befestigt. Grundsätzlich ist aber auch eine andere Formgebung der Welle, beispielsweise quadratisch oder polygonartig, möglich.

Um den Verlauf der Kette 21 zu beeinflussen und eine Vorspannung zu erreichen, ist ein weiteres Umlenkmittel 25 als Kettenspanner vorgesehen. Befindet sich die Schwenkachse des Schwenkarmes 2 weiter von dem ersten Umlenkmittel 23 entfernt, so können auch mehrere zusätzliche Umlenkmittel 25 zur Führung und Vorspannung der Kette 21 eingesetzt werden.

Die Drehachse des Schwenkarmes 2 stimmt in dem hier dargestellten Ausführungsbeispiel im Wesentlichen mit der Drehachse 34 des zweiten Umlenkmittels 24 überein. Die Drehachse 33 des ersten Umlenkmittels 23 und die Drehachse 34 des zweiten Umlenkmittels 24 sind im Wesentlichen parallel zueinander angeordnet.

Wie in Fig. 2 gezeigt, bildet die Gehäuse-Längsachse 27 des Rotationsantriebes 12 mit einer Verbindungsgeraden 28 zwischen den beiden Drehachsen 33, 34 einen Winkel. Dieser Winkel verdeutlicht den großen Freiheitsgrad bei der Wahl des Montageortes des Rotationsantriebes 12. Hierbei können Winkel zwischen +/- 45° erreicht werden. Der hier dargestellte Winkel beträgt ca. 12°.

Wie in Fig. 3 dargestellt, befinden sich sowohl der Rotationsantrieb wie auch das Kettengetriebe in einem Gehäuse 36. Hierbei sind beide Gehäuse einzeln ausgebildet und der Rotationsantrieb lediglich an dem Gehäuse der Betätigungseinrichtung 10, also des Kettengetriebes, angeflanscht.

Durch das erfindungsgemäße Schleuderkettensystem ist es möglich, die Betätigungseinrichtung mit Antrieb für den Schwenkarm beliebig an einem Fahrzeug anzubringen, da keine zwingende geometrische Ausrichtung zwischen der Betätigungseinrichtung, dem Antrieb und der Drehachse des Schwenkarmes erforderlich ist.

## Patentansprüche

1. Schleuderkettensystem (1) mit
- einem Schwenkarm (2),
- einer Schleuderketteneinrichtung (3), die an einem ersten Endbereich (4) des Schwenkarmes (2) vorgesehen ist,
- einer Betätigungseinrichtung (10) zum Bewegen des Schwenkarmes (2) in eine Einsatzposition,
- wobei die Betätigungseinrichtung (10) ein umlaufendes Zugmittelgetriebe (11) aufweist, wobei
ein Rotationsantrieb (12) vorgesehen ist zum Übertragen einer Kraft mittels des Zugmittelgetriebes (11) auf den Schwenkarm (2), **dadurch gekennzeichnet,**
**dass** das Zugmittelgetriebe (11) als Kette 21 ausgebildet ist,
das der Rotationsantrieb (12) eingerichtet ist, ein Drehmoment über ein erstes Umlenkmittel (23), welches als Zahnrad ausgebildet ist, an die Kette (21) mit einzelnen Kettengliedern (22) zu übertragen,
**dass** die Kette (21) eingerichtet ist, die aufgenommene Kraft des Rotationsantriebs (12) an ein zweites, ebenfalls als Zahnrad ausgebildetes, Umlenkmittel (24) weiter zu geben, und
**dass** an dem zweiten Umlenkmittel (24) der Schwenkarm (2) in einem Endbereich (5) an einer Welle des zweiten Umlenkmittels (24) befestigt ist.

2. Schleuderkettensystem nach Anspruch 1,
**dadurch gekennzeichnet,**
**dass** das Zugmittelgetriebe (11) in Form einer Kette (12) mit beweglichen Kettengliedern (22) oder einem Zahnriemen ausgeführt ist.

3. Schleuderkettensystem nach Anspruch 1 oder 2,
**dadurch gekennzeichnet,**
**dass** zur Übertragung der Kraft von dem Rotationsantrieb (12) auf das Zugmittelgetriebe (11) ein erstes Umlenkmittel (23) mit einer ersten Drehachse (33) vorgesehen ist.

4. Schleuderkettensystem nach einem der Ansprüche 1 bis 3,
**dadurch gekennzeichnet,**
**dass** an einem zweiten Endbereich (5) des Schwenkarmes (2) ein zweites Umlenkmittel (24), mit einer zweiten Drehachse (34) vorgesehen ist, und
**dass** das zweite Umlenkmittel (24) zur Kraftübertragung von dem Zugmittelgetriebe (11) auf den Schwenkarm (2) ausgebildet ist.

5. Schleuderkettensystem nach Anspruch 3 oder 4,
**dadurch gekennzeichnet,**
**dass** das erste (23) und/oder das zweite Umlenkmittel (24) zahnradartig ausgebildet sind.

6. Schleuderkettensystem nach einem der Ansprüche 3 bis 5,
**dadurch gekennzeichnet,**
**dass** zwischen dem ersten (23) und dem zweiten Umlenkmittel (24) mindestens ein weiteres Umlenkmittel (25) vorgesehen ist und
**dass** das weitere Umlenkmittel (25) zum Vorspannen des Zugmittelgetriebes (11) ausgebildet ist.

7. Schleuderkettensystem nach einem der Ansprüche 4 bis 6,
**dadurch gekennzeichnet,**
**dass** der Rotationsantrieb (12) eine im Wesentlichen längliche Form mit einer Gehäuse-Längsachse (27) aufweist und
**dass** die Gehäuse-Längsachse (27) mit einer Verbindungsgeraden (28) durch die erste (33) und die zweite Drehachse (34) einen Winkel bildet.

8. Schleuderkettensystem nach Anspruch 7,
**dadurch gekennzeichnet,**
**dass** der Winkel im Bereich zwischen 10° und 20°, insbesondere im Bereich von 12° bis 13° liegt.

9. Schleuderkettensystem nach einem der Ansprüche 3 bis 8,
**dadurch gekennzeichnet,**
**dass** die erste (33) und/oder die zweite Drehachse (34) im Wesentlichen senkrecht zu einer Ebene ausgerichtet ist, in der das Zugmittelgetriebe (11) verläuft.

10. Schleuderkettensystem nach einem der Ansprüche 4 bis 9,
**dadurch gekennzeichnet,**
**dass** die erste (33) und die zweite Drehachse (34) im Wesentlichen parallel ausgelegt sind.

11. Schleuderkettensystem nach einem der Ansprüche 1 bis 10,
**dadurch gekennzeichnet,**
**dass** der Rotationsantrieb (12) pneumatisch angetrieben ist.

12. Schleuderkettensystem nach einem der Ansprüche 1 bis 11,
**dadurch gekennzeichnet,**
**dass** mindestens ein Gehäuse (36) für die Betätigungseinrichtung (10) und/oder den Rotationsantrieb (12), insbesondere ein gemeinsames Gehäuse, vorgesehen ist.

## Claims

1. Centrifugal chain system (1) having
- a swivel arm (2),
- a centrifugal chain device (3), which is provided on a first end region (4) of the swivel arm (2),
- an operating mechanism (10) for moving the swivel arm (2) into a use position,
- wherein the operating mechanism (10) has a revolving belt and chain gear (11),
and wherein a rotary drive (12) is provided for transmitting a force by means of the belt and chain gear (11) to the swivel arm (2),
**characterized in that**
the belt and chain gear (11) is constructed in form of a chain (21),
the rotary drive (12) is constructed to transmit a torque by means of a first deflecting means (23), which is constructed as a gearwheel, to the chain (21) with individual chain links (22),
the chain (21) is constructed to transmit the absorbed power of the rotary drive (12) to a second deflecting means (24) also constructed as a gearwheel, and that at the second deflecting means (24) the swivel arm (2) is fixed in an end region (5) to a shaft of the second deflecting means (24).

2. Centrifugal chain system according to claim 1,
**characterized in that**
the belt and chain gear (11) is constructed in form of a chain (12) with movable chain links (22) or a toothed belt.

3. Centrifugal chain system according to claim 1 or 2,
**characterized in that**
for transmitting the force from the rotary drive (12) to the belt and chain gear (11), a first deflecting means (23) with a first rotation axis (33) is provided.

4. Centrifugal chain system according to one of the claims 1 to 3,
**characterized in that**
on a second end region (5) of the swivel arm (2) is provided a second deflecting means (24) with a second rotation axis (34) and
that the second deflecting means (24) is constructed for transmitting a force from the belt and chain gear (11) to the swivel arm (2).

5. Centrifugal chain system according to claim 3 or 4,
**characterized in that**
the first deflecting means (23) and/or the second deflecting means (24) are constructed in gearwheel-like manner.

6. Centrifugal chain system according to one of the claims 3 to 5,
**characterized in that**
at least one further deflecting means (25) is provided between the first deflecting means (23) and the second deflecting means (24) and
that the further deflecting means (25) is constructed for pretensioning the belt and chain gear (11).

7. Centrifugal chain system according to one of the claims 4 to 6,
**characterized in that**
the rotary drive (12) has a substantially elongated shape with a housing longitudinal axis (27) and
that the housing longitudinal axis (27) forms an angle with a connecting straight line (28) through the first rotation axis (33) and the second rotation axis (34).

8. Centrifugal chain system according to claim 7,
**characterized in that**
the angle is in a range of between 10° to 20°, particularly in a range of 12° to 13°.

9. Centrifugal chain system according to one of the claims 3 to 8,
**characterized in that**
the first rotation axis (33) and/or the second rotation axis (34) is oriented substantially perpendicular to a plane in which passes the belt and chain gear (11).

10. Centrifugal chain system according to one of the claims 4 to 9,
**characterized in that**
the first rotation axis (33) and second rotation axis (34) have a substantially parallel design.

11. Centrifugal chain system according to one of the claims 1 to 10,
**characterized in that**
the rotary drive (12) is driven pneumatically.

12. Centrifugal chain system according to one of the claims 1 to 11,
**characterized in that**
at least one housing (36) is provided for the operating mechanism (10) and/or the rotary drive (12), in particular a common housing.

## Revendications

1. Système (1) de chaîne centrifuge avec
- un bras pivotant (2),
- un dispositif (3) de chaîne centrifuge qui est prévu dans une première zone d'extrémité (4) du bras pivotant (2),
- un dispositif d'actionnement (10) pour déplacer le bras pivotant (2) jusqu'à une position d'utilisation,
- dans lequel le dispositif d'actionnement (10) comprend un mécanisme périphérique (11) à moyens de traction, dans lequel
un entraînement rotatif (12) est prévu pour transmettre une force au moyen du mécanisme (11) à moyens de traction sur le bras de traction (2),
**caractérisé en ce que**
le mécanisme (11) à moyens de traction est conformé en chaîne (21),
**en ce que** l'entraînement rotatif (12) est agencé pour transmettre un couple de rotation à la chaîne (21) avec des éléments individuels (22) de chaîne par l'intermédiaire d'un premier moyen de renvoi (23) qui est conformé en roue dentée, **en ce que** la chaîne (21) est agencée pour transmettre la force reçue de l'entraînement rotatif (12) à un deuxième moyen de renvoi (24) également conformé en roue dentée, et
**en ce que**, sur le deuxième moyen de renvoi (24), le bras pivotant (2) est fixé dans une zone d'extrémité (5) à un arbre du deuxième moyen de renvoi (24).

2. Système de chaîne centrifuge selon la revendication 1,
**caractérisé en ce que**
le mécanisme (11) à moyens de traction est réalisé sous la forme d'une chaîne (12) avec des éléments (22) de chaîne mobiles ou d'une courroie dentée.

3. Système de chaîne centrifuge selon la revendication 1 ou 2,
**caractérisé en ce que**,
pour transmettre la force de l'entraînement rotatif (12) au mécanisme (11) à moyens de traction, il est prévu un premier moyen de renvoi (23) avec un premier axe de rotation (33).

4. Système de chaîne centrifuge selon l'une quelconque des revendications 1 à 3,
**caractérisé en ce que**
dans une deuxième zone d'extrémité (5) du bras pivotant (2), est prévu un deuxième moyen de renvoi (24) avec un deuxième axe de rotation (34), et
**en ce que** le deuxième moyen de renvoi (24) est conformé pour transmettre une force du mécanisme (11) à moyens de traction vers le bras pivotant (2).

5. Système de chaîne centrifuge selon la revendication 3 ou 4,
**caractérisé en ce que**
le premier (23) et/ou le deuxième (24) moyen de renvoi est réalisé à la manière d'une roue dentée.

6. Système de chaîne centrifuge selon l'une quelconque des revendications 3 à 5,
**caractérisé en ce que**
entre le premier (23) et le deuxième (24) moyen de renvoi est prévu au moins un autre moyen de renvoi (25), et
**en ce que** l'autre moyen de renvoi (25) est conformé pour précontraindre le mécanisme (11) à moyens de traction.

7. Système de chaîne centrifuge selon l'une quelconque des revendications 4 à 6,
**caractérisé en ce que**
l'entraînement rotatif (12) présente une forme essentiellement oblongue avec un axe longitudinal (27) de boîtier, et
**en ce que** l'axe longitudinal (27) de boîtier forme un angle avec une ligne (28) de jonction passant par le premier (33) et le deuxième (34) axe de rotation.

8. Système de chaîne centrifuge selon la revendication 7,
**caractérisé en ce que**
l'angle est compris entre 10° et 20°, en particulier entre 12° et 13°.

9. Système de chaîne centrifuge selon l'une quelconque des revendications 3 à 8,
**caractérisé en ce que**
le premier (33) et/ou le deuxième (34) axe de rotation est(sont) orienté(s) pour l'essentiel perpendiculairement à un plan dans lequel s'étend le mécanisme (11) à moyens de traction.

10. Système de chaîne centrifuge selon l'une quelconque des revendications 4 à 9,
**caractérisé en ce que**
le premier (33) et/ou le deuxième (34) axe de rotation est(sont) orienté(s) pour l'essentiel de manière parallèle.

11. Système de chaîne centrifuge selon l'une quelconque des revendications 1 à 10,
**caractérisé en ce que**
l'entraînement rotatif (12) est pneumatique.

12. Système de chaîne centrifuge selon l'une quelconque des revendications 1 à 11
**caractérisé en ce que**
au moins un boîtier (36) est prévu pour le dispositif d'actionnement (10) et/ou l'entraînement rotatif (12), en particulier un boîtier commun.
